# EUROPÄISCHE PATENTANMELDUNG

(11) **EP 3 971 324 A1**
(43) Veröffentlichungstag der Anmeldung: **23.03.2022**
(21) Anmeldenummer: 20196417.8
(22) Anmeldetag: 16.09.2020
(51) Int. Cl.: C25B 1/04, C25B 9/17, C25B 15/08

(54) **VERFAHREN ZUM BETREIBEN EINER ELEKTROLYSEANLAGE SOWIE ELEKTROLYSEANLAGE**

(71) Anmelder: Siemens Energy Global GmbH & Co. KG, 81739 München (DE)
(72) Erfinder: PURUCKER, Thomas, 91093 Hessdorf (DE); WOLF, Erik, 91341 Röttenbach (DE)

(57) **Zusammenfassung**

Die Erfindung betrifft ein Verfahren zum Betreiben einer Elektrolyseanlage (1) umfassend einen Elektrolyseur (2) zur Erzeugung von Wasserstoff und Sauerstoff als Produktgase, wobei die Produktgasströme aus dem Elektrolyseur (2) abgeführt werden. Ein Sekundärgas wird mit zumindest einem der Produktgasströme vermischt, mit dem Ziel durch das Erhöhen des Gesamtvolumenstroms die Fremdgaskonzentration im zu behandelnden Produktgasstrom zu reduzieren.

## Beschreibung

Die Erfindung betrifft ein Verfahren zum Betreiben einer Elektrolyseanlage umfassend einen Elektrolyseur zur Erzeugung von Wasserstoff und Sauerstoff als Produktgase, wobei die Produktgasströme aus dem Elektrolyseur abgeführt werden. Die Erfindung betrifft weiterhin eine Elektrolyseanlage umfassend einen Elektrolyseur zur Erzeugung von Wasserstoff und Sauerstoff als Produktgase, zumindest eine Produktgas-Leitung zum Abführen der Produktgase aus dem Elektrolyseur, wobei an der zumindest einen Produktgas-Leitung eine Gasabscheidevorrichtung angeordnet ist.

Wasserstoff wird heutzutage beispielsweise mittels PEM-Elektrolyse erzeugt. Bestandteil einer PEM-Elektrolysezelle ist eine protonendurchlässige Polymer-Membran (Proton Exchange Membrane), die auf beiden Seiten von porösen Platinelektroden (Anode und Kathode) kontaktiert wird. An diese wird eine äußere Spannung angelegt und auf der Anodenseite des Elektrolyseurs wird Wasser zugeführt. Durch die katalytische Wirkung des Platins wird das Wasser an der Anodenseite zersetzt. Es entstehen dabei Sauerstoff, freie Elektronen und positiv geladene Wasserstoffionen H+. Die Wasserstoffionen H+ diffundieren durch die protonenleitende Membran auf die Kathodenseite, wo sie mit den Elektronen aus dem äußeren Stromkreis zu Wasserstoffmolekülen H2 kombinieren.

Die oben beschriebenen Elektrolysezellen sind in Stacks zusammengefasst. In dem unter Gleichspannung stehenden Stack wird Wasser eingebracht und nach dem Durchlauf durch die Elektrolysezellen treten zwei Produktströme hinaus, bestehend aus Wasser und Gasblasen als Sauerstoff bzw. Wasserstoff. Systemimmanent ist dabei, dass im Produktstrom des einen Produktgases jeweils das andere Produktgas lediglich in geringen Mengen vorliegt. In der Praxis befinden sich im Sauerstoffgasstrom kleine Mengen an Wasserstoff und im Wasserstoffgasstrom kleine Mengen an Sauerstoff. Die Quantität des jeweiligen Fremdgases hängt vom Elektrolysezelldesign ab und variiert auch unter dem Einfluss von Stromdichte, Katalysatorzusammensetzung, Alterung und bei einer PEM-Elektrolyseanlage vom Membranmaterial. Unter Umständen kann es dabei erforderlich sein, die Fremdgaskonzentration zu reduzieren, und zwar bereits unmittelbar an- bzw. direkt nach der Elektroysezelle bzw. dem Elektrolysestack, z.B. in einer dem Elektrolyseur nachgeschalteten Gasabscheidevorrichtung.

Um das oben beschriebene Problem zu lösen, werden insbesondere beide Produktgasströmen einem jeweiligen, katalytisch aktivierten Rekombinator zugeführt, in dem ein Katalysator den Wasserstoff mit dem Sauerstoff rekombinieren lässt, so dass der jeweilige Produktstrom in Wasser rekombiniert. Dazu muss der Gasstrom zuvor auf mindestens 80°C aufgeheizt werden, damit die Umsatzraten des Rekombinators ausreichend hoch sind.

Eine weitere Möglichkeit zur Behandlung des Fremdgasproblems ist es, rekombinationsaktive Oberflächen innerhalb der Elektrolysezelle durch spezielle Behandlungsmaßnahmen zu erzeugen, was jedoch ökonomisch unvorteilhaft sein kann.

Der Erfindung liegt daher die Aufgabe zugrunde, ein neuartiges Verfahren zur Reduzierung des Fremdgases in einem Produktgasstrom einer Wasserstoffelektrolyseanlage vorzuschlagen.

Die Aufgabe wird erfindungsgemäß gelöst durch Verfahren zum Betreiben einer Elektrolyseanlage umfassend einen Elektrolyseur zur Erzeugung von Wasserstoff und Sauerstoff als Produktgase, wobei die Produktgasströme aus dem Elektrolyseur abgeführt werden und wobei ein Sekundärgas mit zumindest einem der Produktgasströme vermischt wird.

Die Elektrolyseanlage kann hierbei eine Hochdruckelektrolyseanlage oder eine Niederdruckelektrolyseanlage sein, die ausgelegt ist für eine PEM-Elektrolyse oder für alkalische Elektrolyse.

Mit Produktgas wird hierbei der in der Elektrolyseanlage hergestellte Sauerstoff oder Wasserstoff bezeichnet. Unter Produktgasstrom wird der sauerstoffseitige- oder wasserstoffseitige Strom verstanden, der neben dem jeweiligen Produktgas u.a. auch weitere Komponenten enthalten kann, z.B. Wasser oder das jeweilige Produkt-Fremdgas.

Die Erfindung basiert auf der Idee, einen zusätzlichen Gasstrom enthaltend das Sekundärgas, das entweder extern bereitgestellt wird oder aus der Eigenproduktion der Elektrolyseanlage stammt, zuzuführen, mit dem Ziel durch das Erhöhen des Gesamtvolumenstroms die Fremdgaskonzentration im zu behandelnden Produktgasstrom zu reduzieren. Das Sekundärgas kann dabei an mehreren Stellen der Elektrolyseanlage zugeführt werden, z.B. in eine Gasabscheidevorrichtung und/oder in den Austrittsbereich des Elektrolysestacks und/oder in den Eintrittsbereich der Elektrolysezelle. Je nach Position der Zufuhrstelle vermischt sich das Sekundärgas mit Produktgas entweder gleich oder erst später, wenn das Produktgas hergestellt wird. Abhängig vom Elektrolysezellaufbau ist das erfindungsgemäße Verfahren essentiell für einen störungsfreien und sicheren Betrieb der Elektrolyseanlage und stellt eine technische Maßnahme dar, die ohne alterungs- und wirkungsgradrelevante Veränderungen an der Elektrolysezelle auskommt.

Gemäß einer bevorzugten Ausführung enthält das Sekundärgas das gleiche Produktgas wie im Produktgasstrom, mit welchem es vermischt wird, und/oder es enthält ein Inertgas. Das Inertgas ist insbesondere für die Sauerstoff-Produktseite vorgesehen. Durch das Beimischen vom Inertgas und/oder von zusätzlichem Sauerstoff in den sauerstoffseitigen Produktgasstrom wird die relative Konzentration von zurückdiffundiertem Wasserstoff reduziert. Auf der Wasserstoff-Produktseite besteht das Sekundärgas insbesondere aus Wasserstoff.

Gemäß einer weiteren bevorzugten Ausführung ist das Sekundärgas ein in der Elektrolyseanlage erzeugtes Gas, welches aufgereinigt und zurückgeführt wird. Dies bedeutet, dass auf der Sauerstoff-Produktseite lediglich Sauerstoff und/oder auf der Wasserstoff-Produktseite lediglich Wasserstoff als Sekundärgas eingesetzt wird. Diese Ausführung hat den wesentlichen Vorteil, dass kein externes Gas bereitgestellt bzw. für den Einsatz in der Elektrolyseanlage gespeichert werden muss.

Bevorzugt wird zumindest ein Teil des Produktgasstroms nach einer Gasabscheidevorrichtung aufgereinigt und als Sekundärgas eingesetzt. Unter Gasabscheidevorrichtung wird hierbei ein flüssig/gasförmig-Phasentrenner zur Gasseparation verstanden. Dieses Vorgehen erfordert einen minimalen bautechnischen Aufwand, indem ein Teil eines bei der Elektrolyse erzeugten Produktgases nach der Gasabscheidevorrichtung abgezweigt und in die Elektrolyseanlage zurückgeführt wird.

Vorzugsweise wird das Sekundärgas unter Druck in die Gasabscheidevorrichtung zurückgeführt, d.h. der Druck des Sekundärgases ist zumindest höher als der Druck in der Gasabscheidevorrichtung. Um den Druck zu erhöhen, wird insbesondere ein Gebläse oder ein Verdichter verwendet.

Im Hinblick auf einen möglichst flexiblen und präzisen Betrieb der Elektrolyseanlage wird vorteilhafterweise eine Fremdgaskonzentration im Produktgasstrom, welches mit dem Sekundärgas vermischt wird, bestimmt und der Volumenstrom des Sekundärgases wird in Abhängigkeit von der Fremdgaskonzentration angepasst. Die Bestimmung der Fremdgaskonzentration kann rechnerisch oder über Messungen mit Hilfe von Gassensoren erfolgen. Die Gassensoren messen z.B. über die thermische Leitfähigkeit insbesondere den Abstand von der Zündgrenze. Über eine differenzielle Temperaturmessung über den Rekombinator lassen sich der Grad der Fremdgaskonzentration und damit die Menge der erforderlichen Sekundärgaszufuhr bestimmen und optimiert anpassen. Alternativ kann die Gaszusammensetzung auch über Wärmeleitfähigkeit, Schallgeschwindigkeit und Gaschromatographen ermittelt werden. Beispielsweise wird die Fremdgaskonzentration austrittsseitig an der Gasabscheidevorrichtung bestimmt.

Vorzugsweise wird zumindest ein Teil eines Produktgases abgezweigt und in einem Gasspeicher zwischengespeichert, wobei das gespeicherte Produktgas beim Anfahren der Elektrolyseanlage als Sekundärgas zurückgeführt wird. Die Abzweigung erfolgt z.B. von der oder nach der Gasabscheidevorrichtung. Das Produktgas wird zudem aufgereinigt, z.B. in einem Rekombinator. Um die Elektrolyseanlage starten zu können, wird das gereinigte Produktgas zu einem Zeitpunkt, zu dem das Rezyklieren der Produktgase noch nicht aktiv ist, da noch keine Produktgase hergestellt sind, zurückgeführt und mit dem Produktgasstrom vermischt.

Die Aufgabe wird weiterhin erfindungsgemäß gelöst durch eine Elektrolyseanlage umfassend einen Elektrolyseur zur Erzeugung von Wasserstoff und Sauerstoff als Produktgase, zumindest eine erste Produktgas-Leitung und eine zweite Produktgas-Leitung zum Abführen der Produktgase aus dem Elektrolyseur, wobei eine Sekundärgas-Leitung vorgesehen ist, durch welche ein Sekundärgas mit zumindest einem der Produktgasströme in einer der Produktgas-Leitungen vermischt wird. Die in Bezug auf das Verfahren bereits angeführte Vorteile und bevorzugten Ausgestaltungen lassen sich sinngemäß auf die Elektrolyseanlage übertragen.

Vorzugsweise mündet dabei die Sekundärgas-Leitung in eine dem Elektrolyseuer nachgeschaltete Gasabscheidevorrichtung. Bevorzugt ist die Sekundärgas-Leitung von der zumindest eine Produktgas-Leitung nach der Gasabscheidevorrichtung abgezweigt. Für die Aufreinigung des Produktgases, bevor es als Sekundärgas zurückgeführt wird, ist vorzugsweise an der zumindest einen Produktgas-Leitung ein Rekombinator angeordnet. Darüber hinaus enthält die Sekundärgas-Leitung zweckdienlicherweise ein Gebläse. Gemäß einer bevorzugten Ausgestaltung umfasst die Elektrolyseanlage zudem eine Messvorrichtung zum Messen einer Fremdgaskonzentration im Produktgasstrom, welcher mit dem Sekundärgas vermischt wird, sowie eine Steuervorrichtung, die dafür geeignet ist, den Volumenstrom des Sekundärgases in Abhängigkeit von der Fremdgaskonzentration anzupassen. Gemäß einer weiteren bevorzugten Ausgestaltung ist die Sekundärgas-Leitung fluidtechnisch mit einem Gasspeicher für das Sekundärgas verbunden.

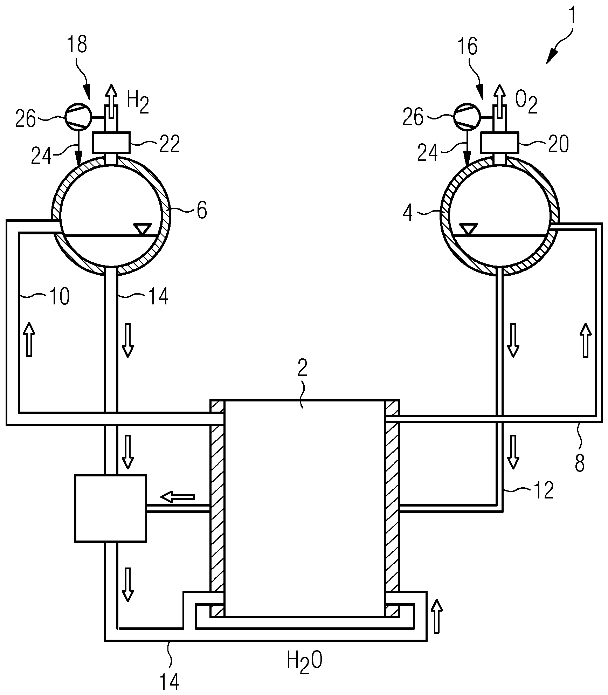

Ein Ausführungsbeispiel der Erfindung wird anhand der Zeichnung näher erläutert. Hierin zeigt die einzige Figur eine Elektrolyseanlage 1 umfassend einen Elektrolyseur 2. Die Elektrolyseanlage 1 verfügt außerdem über eine sauerstoffseitige, erste Gasabscheidevorrichtung 4 sowie über eine wasserstoffseitige, zweite Gasabscheidevorrichtung 6. Der Elektrolyseur 2 ist über eine erste Produktgas-Leitung 8 mit der ersten Gasabscheidevorrichtung 4 und über eine zweite Produktgas-Leitung 10 mit der zweiten Gasabscheidevorrichtung 6 verbunden. Über die erste Produktgas-Leitung 8 wird demnach ein Gemisch aus Wasser und Sauerstoff transportiert. Durch die zweite Produktgas-Leitung 10 wird ein Gemisch aus Wasser und Wasserstoff aus dem Elektrolyseur 2 hinausgeführt. Anschließend findet in der jeweiligen Gasabscheidevorrichtung 4, 6 eine Flüssig-Gas-Trennung statt.

Weiterhin wird über eine Wasserrückführleitung 12 Wasser aus der ersten Gasabscheidevorrichtung 4 in den Elektrolyseur 2 zurückgeführt.

Das Wasser aus der zweiten Gasabscheidevorrichtung 6 wird in eine Wasserversorgungsleitung 14 des Elektrolyseurs 2 hineingeleitet.

In der Praxis enthält der Sauerstoffgasstrom in der ersten Produktgas-Leitung 8 kleine Mengen Wasserstoff und der Wasserstoffgasstrom in der zweiten Produktgas-Leitung 8 enthält kleine Mengen an Sauerstoff. Um diese Fremdgase zu entfernen, d.h. die Produktgase Sauerstoff 16 und Wasserstoff 18 aufzureinigen, ist der jeweiligen Gasabscheidevorrichtung 4, 6 ein Rekombinator 20, 22 nachgeschaltet, in dem der gasförmige Wasserstoff katalytisch mit dem gasförmigen Sauerstoff zu Wasser oxidiert.

Ein Teil des auf diese Weise aufbereiteten, jeweiligen Produktgases 16, 18 wird über eine Sekundärgas-Leitung 24 in die jeweilige Gasabscheidevorrichtung 4, 6 zurückgeführt. In der Sekundärgas-Leitung 24 ist hierbei ein Gebläse 26 integriert, mit dessen Hilfe der Druck des aufgereinigten Produktgases Sauerstoff bzw. Wasserstoff vor der Gasabscheidevorrichtung 4, 6 erhöht wird. Durch das abgezweigte, reine Produktgas wird die Fremdgaskonzentration im zu behandelnden Produktgasstrom in den Produktgas-Leitungen 8, 12 durch das Erhöhen des Gesamtvolumenstroms reduziert.

Darüber hinaus ist es möglich, einen besonders flexiblen Betrieb zu gewährleisten, indem die Fremdgaskonzentration im jeweiligen Produktgasstrom bestimmt wird und der Volumenstrom des Sekundärgases in Abhängigkeit dieser Fremdgaskonzentration variiert wird. Hierfür sind an den Produktgas-Leitungen 8, 12 Messvorrichtungen angebracht, welche jedoch in der Figur nicht gezeigt sind.

Eine weitere Option besteht darin, das gereinigte Produktgas, welches als Sekundärgas vorgesehen ist, in einem Gasspeicher zwischenzuspeichern und beim Anfahren der Elektrolyseanlage in den Gasabscheider zurückzuführen. Der nicht näher gezeigte Gasspeicher ist insbesondere mit der jeweiligen Sekundärgas-Leitung 24 fluidtechnisch verbunden.

Alternativ zu einer Zuführung des Sekundärgases in die Gasabscheidevorrichtung, kann dieses in den Austrittsbereich aus dem Elektrolyseur 2 und/oder in den Eintrittsbereich des Elektrolyseurs 2 hineingeleitet werden. Als weitere Alternative ist zudem denkbar, anstelle eines aufgereinigten Produktgases zumindest sauerstoffseitig als Sekundärgas ein Internetgas, wie z.B. Stickstoff, zuzuführen.

Im gezeigten Ausführungsbeispiel wird der Produktgasstrom sowohl sauerstoff- als auch wasserstoffseitig mit einem Sekundärgas vermischt. Jedoch ist eine Zuführung des Sekundärgases auf nur einer Produktseite möglich, z.B. nur sauerstoffseitig.

## Patentansprüche

**1.** Verfahren zum Betreiben einer Elektrolyseanlage (1) umfassend einen Elektrolyseur (2) zur Erzeugung von Wasserstoff und Sauerstoff als Produktgase, wobei die Produktgasströme aus dem Elektrolyseur (2) abgeführt werden,
**dadurch gekennzeichnet, dass** ein Sekundärgas mit zumindest einem der Produktgasströme vermischt wird.

**2.** Verfahren nach Anspruch 1,
**dadurch gekennzeichnet, dass** das Sekundärgas das gleiche Produktgas wie im Produktgasstrom, mit welchem es vermischt wird, enthält und/oder ein Inertgas enthält.

**3.** Verfahren nach einem der vorhergehenden Ansprüche,
**dadurch gekennzeichnet, dass** das Sekundärgas ein in der Elektrolyseanlage (1) erzeugtes Gas ist, welches aufgereinigt und zurückgeführt wird.

**4.** Verfahren nach Anspruch 3,
**dadurch gekennzeichnet, dass** zumindest ein Teil des Produktgasstroms nach einer Gasabscheidevorrichtung (4, 6) aufgereinigt und als Sekundärgas eingesetzt wird.

**5.** Verfahren nach einem der Ansprüche 4,
**dadurch gekennzeichnet, dass** das Sekundärgas unter Druck in die Gasabscheidevorrichtung (4, 6) zurückgeführt wird.

**6.** Verfahren nach einem der vorhergehenden Ansprüche,
**dadurch gekennzeichnet, dass** eine Fremdgaskonzentration im Produktgasstrom, welches mit dem Sekundärgas vermischt wird, bestimmt wird und der Volumenstrom des Sekundärgases in Abhängigkeit von der Fremdgaskonzentration angepasst wird.

**8.** Verfahren nach einem der vorhergehenden Ansprüche,
**dadurch gekennzeichnet, dass** zumindest ein Teil eines Produktgases abgezweigt wird und in einem Gasspeicher zwischengespeichert wird, wobei das gespeicherte Produktgas beim Anfahren der Elektrolyseanlage (1) als Sekundärgas zurückgeführt wird.

**9.** Elektrolyseanlage (1) umfassend einen Elektrolyseur (2) zur Erzeugung von Wasserstoff (18) und Sauerstoff (16) als Produktgase, eine erste Produktgas-Leitung (8) und eine zweite Produktgas-Leitung (10) zum Abführen der Produktgase aus dem Elektrolyseur (2), **dadurch gekennzeichnet, dass** eine Sekundärgas-Leitung (24) vorgesehen ist, durch welche ein Sekundärgas mit zumindest einem der Produktgasströme in einer der Produktgas-Leitungen (8, 10) vermischt wird.

**10.** Elektrolyseanlage (1) nach Anspruch 9,
**dadurch gekennzeichnet, dass** die Sekundärgas-Leitung (24) in eine dem Elektrolyseur (2) nachgeschaltete Gasabscheidevorrichtung (4, 6) mündet.

**11.** Elektrolyseanlage (1) nach Anspruch 10,
**dadurch gekennzeichnet, dass** die Sekundärgas-Leitung (24) von der zumindest einen Produktgas-Leitung (8, 10) nach der Gasabscheidevorrichtung (4, 6) abgezweigt ist.

**12.** Elektrolyseanlage (1) nach einem der Ansprüche 9 bis 11,
**dadurch gekennzeichnet, dass** an der zumindest einen Produktgas-Leitung (8, 10) ein Rekombinator (20, 22) angeordnet ist.

**13.** Elektrolyseanlage (1) nach einem der Ansprüche 9 bis 12,
**dadurch gekennzeichnet, dass** die Sekundärgas-Leitung (24) ein Gebläse (26) enthält.

**14.** Elektrolyseanlage (1) nach einem der Ansprüche 9 bis 13, **gekennzeichnet durch** eine Messvorrichtung zum Messen einer Fremdgaskonzentration im Produktgasstrom, welcher mit dem Sekundärgas vermischt wird, sowie durch eine Steuervorrichtung, die dafür geeignet ist, den Volumenstrom des Sekundärgases in Abhängigkeit von der Fremdgaskonzentration anzupassen.

**15.** Elektrolyseanlage (1) nach einem der Ansprüche 9 bis 14, **dadurch gekennzeichnet, dass** die Sekundärgas-Leitung (24) fluidtechnisch mit einem Gasspeicher für das Sekundärgas verbunden ist.
